# EUROPÄISCHE PATENTANMELDUNG

(11) **EP 4 697 272 A1**
(43) Veröffentlichungstag der Anmeldung: **18.02.2026**
(21) Anmeldenummer: 24195032.8
(22) Anmeldetag: 16.08.2024
(51) Int. Cl.: G06T 11/00, G06N 20/00

(54) **VERFAHREN ZUR GENERIERUNG EINES DATENSATZES ZUM TRAINIEREN UND/ODER TESTEN EINES MASCHINELLEN LERNSYSTEMS**

(71) Anmelder: Robert Bosch GmbH, 70469 Stuttgart (DE); CARIAD SE, 38440 Wolfsburg (DE)
(72) Erfinder: Laube, Kevin Alexander, 72108 Rottenburg am Neckar (DE); Borges, Julio, 70176 Stuttgart (DE)
(74) Vertreter: Bösherz Goebel Patentanwälte

(57) **Zusammenfassung**

Die Erfindung betrifft ein Verfahren (100) zur Generierung wenigstens eines Datensatzes zum Trainieren und/oder Testen eines maschinellen Lernsystems (55), wobei die Generierung durch ein Steuerungsmodell (50) vorgesehen ist.

## Beschreibung

Die Erfindung betrifft ein Verfahren zur Generierung wenigstens eines Datensatzes. Ferner betrifft die Erfindung ein Maschinenlernmodell, ein Computerprogramm, eine Vorrichtung sowie ein Speichermedium zu diesem Zweck.

### Stand der Technik

Die Bildsynthese durch generative künstliche Intelligenz (KI) bezeichnet die Erzeugung von Bildern durch generative Modelle, die darauf trainiert sind, visuelle Inhalte zu generieren. Dabei können bestimmte Bedingungen oder Eingaben vorgegeben werden. So kann das Modell bspw. auf verschiedene Eingabeformen reagieren, von einfachen Textbeschreibungen bis hin zu komplexen Datensätzen.

Die Bildsynthese ermöglicht eine breite Palette von Anwendungen, insbesondere auch für das Trainieren und/oder Testen eines maschinellen Lernsystems für Fahrerassistenzsysteme oder autonomes Fahren. Hier kommt es besonders auf die flexible und anpassungsfähige Anwendung von Bedingungen und Eingaben an.

Aus dem Stand der Technik ist bekannt, dass existierende Verfahren zur Bildsynthese hauptsächlich auf einer begrenzten Anzahl von Bedingungen basieren. Mit Technologien wie ControlNet ist es möglich, die Erzeugung synthetischer Bilder mittels Stable Diffusion durch bedingte Eingaben zu steuern, die über einfache Texteingaben hinausgehen. Diese Bedingungen können sowohl aus realen Bildern als auch aus simulierten Umgebungen abgeleitet werden.

Bei diesen Lösungen können bei Verwendung mehrerer Bedingungen, wie z. B. Canny Edge, Depth Map oder Semantic Label Map, allerdings Probleme auftreten, wie z.B. eine Verschlechterung der Bildsynthesequalität. Die Kombination mehrerer Bedingungen, insbesondere für verschiedene Bildregionen, stellt daher nach wie vor eine Herausforderung dar.

### Offenbarung der Erfindung

Gegenstand der Erfindung ist ein Verfahren mit den Merkmalen des Anspruchs 1, ein Maschinenlernmodell mit den Merkmalen des Anspruchs 11, ein Computerprogramm mit den Merkmalen des Anspruchs 13, eine Vorrichtung mit den Merkmalen des Anspruchs 14 sowie ein computerlesbares Speichermedium mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Maschinenlernmodell, dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zur Generierung wenigstens eines Datensatzes zum Trainieren und/oder Testen eines maschinellen Lernsystems, insbesondere für eine Anwendung bei einer Fahrzeugsteuerung. Dabei kann die Generierung durch ein, insbesondere generatives, Steuerungsmodell vorgesehen sein, welches ebenfalls auf Maschinenlernen basiert und somit als ein Lernsystem oder Teil davon ausgeführt sein kann.

Das erfindungsgemäße Verfahren kann das Training und/oder Testen des Steuerungsmodells umfassen, um das Steuerungsmodell für die Anwendung von kombinierten Bedingungen zu trainieren. Das erfindungsgemäße Verfahren kann alternativ oder zusätzlich auch die Inferenz des Steuerungsmodells umfassen, bei welchem kombinierte Bedingungen ausgewählt werden können. Ebenfalls ist es möglich, dass das erfindungsgemäße Verfahren die Verwendung des Datensatzes beim Lernsystem und/oder die Inferenz des Lernsystems umfasst.

Das erfindungsgemäße Verfahren kann ein Auswählen von mindestens zwei verschiedenen Bedingungen umfassen, welche für eine Anwendung bei der Generierung des Datensatzes ausgewählt werden. Die Bedingungen können jeweils unterschiedliche Steuerungsmöglichkeiten für die Generierung des Datensatzes bereitstellen. Dabei kann ein Einfluss der jeweiligen Bedingung auf die Generierung spezifiziert werden. Es kann in diesem Zusammenhang auch von einer Kontrolle der Generierung oder einem Kontrolleinfluss auf die Generierung gesprochen werden.

Außerdem kann das erfindungsgemäße Verfahren ein Auswählen von Bereichen innerhalb der Bedingungen umfassen, in denen die Anwendung der Bedingungen ausgenommen wird, vorzugsweise die Anwendung aller Bedingungen ausgenommen wird. Dies ermöglicht es, bestimmte Bereiche des Datensatzes ohne Einschränkung durch die (ausgewählten/kombinierten) Bedingungen generieren zu lassen.

Die Bedingungen können räumlich definiert sein und somit bevorzugt als zumindest zweidimensionale Bedingungen ausgeführt sein. Dies ist z. B. der Fall, wenn die Bedingungen als Masken oder Maps ausgeführt sind, die verschiedene Vorgaben für die Generierung räumlich definieren, sodass die jeweilige Vorgabe nur für einen bestimmten Bereich zum Einsatz kommt. Alternativ können die Bedingungen daher auch als Masken/Maps oder Bedingungsmasken bezeichnet werden, sodass die Bereiche entsprechend Bereiche in der Maske/Map sind. Die ausgewählten Bereiche können zumindest zweidimensionale Bereiche in den Maps sein und bspw. durch Koordinaten angegeben werden. Die räumlich definierten Bedingungen können, um einige wenige Beispiele zu nennen, als semantische Segmentierungs-Label-Maps oder Canny-Kanten ausgeführt sein.

Die Bedingungen können ferner beispielsweise spezifische Algorithmen, Filter und/oder Verarbeitungsvorschriften sein, die durch zumindest eine Map zumindest zweidimensional definiert sind und somit auf bestimmte Bereiche innerhalb der Map angewendet werden sollen. Die Bedingungen können bspw. als Vorgabe für die Generierung verschiedene Verarbeitungsvorschriften auf Pixelbasis, insbesondere der Pixelwerte, bereitstellen.

Die Bereiche können unterschiedliche Regionen oder Segmente innerhalb der Map darstellen, die jeweils unterschiedliche Eigenschaften oder Merkmale aufweisen. Beispielsweise könnten in einem Bereich einer semantischen Segmentierungs-Label-Map spezifische Objekte wie Gebäude oder Straßen gekennzeichnet sein, während ein anderer Bereich Informationen über Vegetation oder dergleichen enthält. In den Bereichen, die durch Canny-Kanten hervorgehoben werden, können ggf. spezielle Filter oder Algorithmen zur Kantenverstärkung oder zur Hervorhebung von Objektbegrenzungen angewendet werden.

Ferner kann das erfindungsgemäße Verfahren ein Kombinieren der ausgewählten Bedingungen umfassen. Dies kann bspw. durch eine entsprechende Spezifikation möglich sein, welche durch das Steuerungsmodell verwendet wird.

Anschließend kann gemäß dem erfindungsgemäßen Verfahren ein Generieren des Datensatzes mittels des Steuerungsmodells (d. h. insbesondere durch und/oder gesteuert durch das Steuerungsmodell) bei Anwendung der kombinierten Bedingungen und unter Beachtung der ausgewählten Bereiche vorgesehen sein. Dabei kann das Steuerungsmodell ein maschinelles Lernmodell wie ein ControlNet Diffusionsmodell sein. Das Steuerungsmodell kann als ein einziges Steuerungsmodell ausgeführt sein, und insbesondere (End-to-End) zur Anwendung der kombinierten Bedingungen trainiert worden sein. Das Steuerungsmodell kann je nach Architektur selbst als ein generatives Modell ausgeführt sein oder dazu ausgeführt sein, ein anderes generative Modell (wie Stable Diffusion) zu kontrollieren.

Das erfindungsgemäße Verfahren stellt eine flexible Möglichkeit zur automatischen Generation von Datensätzen und insbesondere zur Bildsynthese bereit, die es ermöglicht, automatisiert
a) mehrere Bedingungen gleichzeitig zu berücksichtigen, und/oder
b) verschiedene Kombinationen dieser Bedingungen während der Inferenzzeit zu verwenden und/oder
c) auch Bereiche komplett von dem Einfluss einzelner oder mehrerer der Bedingungen auszunehmen.

Das erfindungsgemäße Verfahren ermöglicht für Einsatzgebiete wie das autonome Fahren oder dergleichen eine Erzeugung von Datensätzen, insbesondere Bilddaten, die eine präzise Detaillierung einer Szene und insbesondere Verkehrsszene bieten. Gleichzeitig können abwechslungsreiche Szenen dargestellt werden, indem die Bedingungen nur in bestimmten räumlichen Regionen berücksichtigt werden. So kann zum Beispiel für einen bestimmten Bereich ein höheres Gewicht auf Canny-Kanten gelegt werden als auf Semantiklabels, um so präzise Konturen und Formen darstellen zu können. In anderen Bereichen kann das Gewicht jedoch umgekehrt sein, sodass die Semantiklabels stärker betont werden. Es können auch Bereiche vorgesehen sein, in denen keinerlei Bedingungen angewandt werden und daher das Diffusionsmodell uneingeschränkt die Synthese durchführen kann.

Die Bedingungen können pro Szene und/oder pro Bild kombiniert werden, und es können gleichzeitig auch dabei Bereiche teilweise oder komplett von dem Einfluss der Bedingungen ausgenommen werden. Mit anderen Worten kann die Auswahl der Bedingungen und der Bereiche gemäß dem erfindungsgemäßen Verfahren pro Bild/Szene möglich sein.

Es ist ebenfalls denkbar, dass bei dem Generieren des Datensatzes eine Kontrolle des Generationsprozesses durch das Steuerungsmodell entsprechend der ausgewählten Bedingungen und/oder beschränkt auf den nicht ausgenommenen Bereich vorgenommen wird.

Es können gemäß dem erfindungsgemäßen Verfahren auch Bereiche ausgewählt sein, in denen die Anwendung der Bedingungen vollständig ausgenommen wird, und in welchen somit keine der Bedingungen den Einfluss spezifizieren und/oder angewendet werden und daher die Generation hinsichtlich der Bedingungen unkontrolliert durch das Steuerungsmodell stattfindet. Dies ermöglicht es, dass es Bereiche gibt, in denen (kombiniert) mehrere Bedingungen gleichzeitig Kontrolle ausüben und/oder ein Einfluss von mehreren Bedingungen gleichzeitig spezifiziert ist, und es auch Bereiche gibt, in denen keinerlei Kontrolle durch die Bedingungen ausgeübt wird.

Die Auswahl kann z. B. eine Maskierung von Elementen im Bild sein, durch welche festgelegt wird, welche Bedingungen für das Element zur Anwendung kommen. Es kann in diesem Zusammenhang auch von maskierenden Bedingungen gesprochen werden. Dabei bedeutet "maskierende" Bedingungen insbesondere, dass Elemente/Bereiche für die verschiedenen Bedingungen (z.B. Semantische Label bzw. Labelmaps, Canny-Kanten) maskiert werden, um ihre Einfluss auf die Bildsynthese zu regeln. Durch Maskierung kann der Einfluss einer bestimmten Bedingung reduziert oder gar ausgeschaltet werden, so dass ein Steuerungsmodell wie ControlNet korrekt die verschiedenen Bedingungen verarbeiten kann und die Bildsynthese des generativen Modells auf verschiedene Weise steuern kann, je nach den Anforderungen des bestimmten Problems.

Um die Kontrolle des Generationsprozesses durch die kombinierten Bedingungen zu ermöglichen, kann es vorgesehen sein, dass ein Steuerungsmodell wie ControlNet mit gemeinsamen maskierten Bedingungen (engl. joint masked conditions) trainiert wird. Es kann sogar ein an sich bekannter Trainingsprozess unverändert verwendet werden, indem lediglich eine neue Komponente hinzugefügt wird, welche eine gemeinsame Kombination mehrerer Bedingungen bereitstellt.

Ausgehend von einem Basisbild, auch Originalbild bezeichnet, können mehrere Bedingungen extrahiert werden, um ein Steuerungsmodell wie bspw. ControlNet zu trainieren, das lernt, wie das Bild angesichts der Bedingungen zu rekonstruieren ist. Dabei kann auch die Extraktion von Canny Edges und einer Semantic Label Map mit einem vortrainierten semantischen Segmentierungsmodell vorgesehen sein. Ebenfalls ist es möglich, dass menschliche Annotationen verwendet werden, falls diese vorhanden sind. Es sind bevorzugt mehr als zwei oder eine andere Kombination von Bedingungen möglich (z. B. Tiefenkarte und semantische Labelkarte usw.).

Grundsätzlich kommen dabei für jede Art von Bedingung (Canny, Semantische Etiketten, etc.) drei mögliche Aktionen über maskierte Bedingungen beim Training von ControlNet in Frage: 1) Vollständige Beibehaltung, 2) teilweise Beibehaltung (nach Klassen oder Bereichen) oder 3) Entfernung.

Während des Trainingsprozesses können die Masken, die festlegen, wie die verschiedenen Bedingungen/Vorgaben angewendet werden, nach dem Zufallsprinzip ausgewählt werden. Auf diese Weise lernt das Steuerungsmodell, insbesondere ControlNet, sich während der Inferenzzeit auf eine einzige Bedingung (z. B. nur canny edge oder nur semantische Etiketten), eine vollständige Kombination aus beiden oder eine teilweise Kombination aus beiden zu verlassen. Der Benutzer kann auf diese Weise frei entscheiden, welche Bedingungen er verwenden und wie er sie während der Inferenzzeit kombinieren möchte.

Außerdem ist es von Vorteil, wenn das Verfahren ferner umfasst:
- Erfassen einer ersten Benutzereingabe, welche eine manuelle Auswahl der Bedingungen spezifiziert, und/oder
- Erfassen einer zweiten Benutzereingabe, welche eine manuelle Auswahl der Bereiche spezifiziert.

Dabei kann die Auswahl der Bedingungen auf Basis der ersten Benutzereingabe und/oder die Auswahl der Bereiche auf Basis der zweiten Benutzereingabe erfolgen, um eine Entscheidung des Benutzers zu ermöglichen, welche Bedingungen kombiniert werden sollen, und/oder um eine Maskierung derjenigen Bedingungen durch den Benutzer zu ermöglichen, welche ihren Einfluss auf die Generation des Datensatzes, insbesondere auf eine Bildsynthese, regelt. Dadurch wird erreicht, dass das Steuerungsmodell verschiedene Benutzereingaben und -ausgaben verarbeiten kann, um die Kombination von Bedingungen zu steuern.

Es kann weiter möglich sein, dass das maschinelle Lernsystem als ein Modell zur Bildsynthese, vorzugsweise als ein Bilddiffusionsmodell, ausgeführt ist, und/oder dass das Steuerungsmodell als ein Modell zur Kontrolle eines Bilddiffusionsmodells zur Bildsynthese ausgeführt ist.

Weiter ist es denkbar, dass der Datensatz mehrere synthetische Bilder umfasst, welche Objekte in einer Umgebung darstellen, die zum Trainieren und/oder Testen des maschinellen Lernsystems vorgesehen sind. Die Umgebung kann z. B. eine Kameraumgebung und/oder eine Fahrzeugumgebung sein.

Ferner kann eine Gestaltung und/oder Anordnung der Objekte durch die Anwendung der Bedingungen beeinflusst werden. Dies hat den Vorteil, dass das maschinelle Lernsystem auf Grundlage mehrerer Bedingungen trainiert und getestet werden kann, was eine größere Flexibilität und Präzision in der Bilderzeugung ermöglicht. Die Kombination verschiedener Bedingungen erlaubt es, qualitative hochwertige Bilder zu erzeugen, die von einer Teilmenge von Bedingungen abhängen.

Gemäß einer vorteilhaften Weiterbildung der Erfindung kann vorgesehen sein, dass die Anwendung der kombinierten Bedingungen durch ein einziges Steuerungsmodell bereitgestellt wird. Somit kann die Generierung des Datensatzes nur mittels eines einzigen Steuerungsmodells, insbesondere eines End-to-End trainierten Modells wie ControlNet, erfolgen. Daher kann es vorgesehen sein, dass die kombinierten Bedingungen durch ein einziges Steuerungsmodell bereitgestellt werden, das alle erforderlichen Informationen für die Kontrolle und/oder Generierung des Datensatzes enthält. Insbesondere können damit die Nachteile reduziert werden, die sich aus einer kaskadierenden Anwendung von Steuerungsmodellen mit verschiedenen Bedingungen ergeben.

Optional ist es denkbar, dass das Verfahren ferner umfasst:
- Bereitstellen von Originalbildern, welche zum Training des Steuerungsmodells und/oder eines durch das Steuerungsmodell kontrollierten Bilddiffusionsmodell vorgesehen sind.

Ferner ist es möglich, dass das Verfahren umfasst:
- Durchführen der Auswahl der Bereiche in der Form von Pixeln und/oder Punkten und/oder zweidimensionalen Bereichen, insbesondere im Originalbild, in denen die, insbesondere kombinierten, Bedingungen nicht vorgesehen - also ausgenommen - sein sollen.

Damit wird der Vorteil erzielt, dass das Steuerungsmodell eine Vielzahl von Bedingungen gleichzeitig berücksichtigen kann, was zu einer größeren Flexibilität und Präzision in der Bilderzeugung führt. Durch die Kombination mehrerer Bedingungen kann ferner eine präzise Detaillierung der Szene erreicht werden.

Gemäß einem weiteren Vorteil kann vorgesehen sein, dass die generierten Bilder und/oder die Originalbilder eine Verkehrsszene repräsentieren, um den Datensatz für das Trainieren und/oder Testen des maschinellen Lernsystems zur Steuerung eines Fahrzeuges bei einem zumindest teilweise autonomen Fahren und/oder bei einem Fahrerassistenzsystem zu verwenden. Damit wird der Vorteil erzielt, dass die Bilder durch den Einsatz der kombinierten und maskierten Bedingungen für das Training von Maschinenlernmodellen im Bereich der Fahrzeugsteuerung optimiert werden können, da Verkehrsszenarien typischerweise sehr komplexe Umgebungen mit vielen Objekten und Interaktionen darstellen.

Es ist weiter denkbar, dass das Training dafür vorgesehen ist, das maschinelle Lernsystem mittels des generierten Datensatzes zur Klassifizierung, insbesondere zur Bildklassifikation, von digitalen Bildern auf Grundlage von Bildpunkten und/oder -pixeln, insbesondere Pixelwerte, vorzugsweise Kanten oder Pixelattribute, (der Bilder) zu trainieren. Diese digitalen Bilder können bspw. digitale Bilder sein, welche aus einer Aufzeichnung durch wenigstens einen Sensor, vorzugsweise wenigstens einer Kamera, bevorzugt eines Fahrzeuges und besonders bevorzugt einer Kamera- und/oder Fahrzeugumgebung während einer Fahrt (eines Fahrzeuges) resultieren. Die Aufzeichnung ist z. B. durch wenigstens eine Kamera des Fahrzeuges möglich. Dabei kann die Klassifizierung dafür vorgesehen sein, Objekte in einer durch die digitalen Bilder abgebildeten Umgebung zu erkennen und/oder eine Verkehrsszene zu erfassen.

Die Klassifizierung kann für verschiedene technische Anwendungen vorgesehen sein. Ein Beispiel ist die Anwendung im Fahrzeug. Auf Basis der Klassifizierung, insbesondere wenigstens eines Klassifizierungsergebnisses, kann bspw. wenigstens eine Steuerungsaktion, vorzugsweise für ein Fahrzeug oder für ein anderes technisches System, initiiert und/oder durchgeführt werden.

Ein Klassifizierungsergebnis kann zumindest eines der folgenden Ergebnisse umfassen und/oder für zumindest eines der folgenden Ergebnisse spezifisch sein: eine Kategorie von Objekten, eine Identifikation von Objekten, eine Position von Objekten und/oder Hindernissen (z. B. in Fahrtrichtung oder neben der Fahrtrichtung), eine Anwesenheit von Hindernissen, eine Beschreibung einer Verkehrsszene, eine Gefahrenmeldung, eine Anzahl von Objekten, eine Art und/oder Position von Fahrbahnmarkierungen und/oder eine Fahrbahnbegrenzung, eine Position und/oder ein Zustand von Verkehrssignalanlagen, eine Position einer Fahrbahn, oder dergleichen.

Auf Grundlage des Klassifizierungsergebnisses kann wenigstens eine Steuerungsaktion für das Fahrzeug initiiert und/oder durchgeführt werden. Die Steuerungsaktion kann zumindest eine der folgenden umfassen: ein Bremsen, ein Lenken, ein Beschleunigen, ein Überholmanöver, ein Notbremsen, eine Aktivierung einer Alarmanlage, eine Aktivierung einer Warnblinkanlage, eine Aktivierung eines Fahrtrichtungsanzeigers, eine Lichtsteuerung, oder dergleichen.

Durch die Klassifizierung kann z. B. ein Hindernis erkannt werden, unabhängig davon, ob dieses direkt in der Fahrtrichtung oder daneben liegt. Je nach Ortung (z. B. in Abhängigkeit von der voraussichtlichen Fahrzeugtrajektorie) kann eine entsprechende Steuerungsaktion wie ein Abbremsen oder Ausweichen initiiert werden.

Bspw. kann ferner eine Bremsung eingeleitet werden, wenn die Klassifizierung ergibt, dass sich Hindernisse in Fahrtrichtung befinden und/oder eine Kollision wahrscheinlich ist. Auch ist es denkbar, dass eine Fahrbahn und/oder eine Fahrbahnbegrenzung auf Basis der Klassifizierung erkannt werden, um das Fahrzeug durch die Steuerungsaktion zumindest teilweise automatisiert auf der Fahrbahn zu bewegen.

Das Fahrzeug kann als ein Kraftfahrzeug und/oder Personenkraftfahrzeug und/oder zumindest teilweise autonomes Fahrzeug ausgebildet sein.

Die "Klassifizierung" und "Bildklassifikation" kann auch eine "Objektdetektion" bzw. "Objektdetektion in Bildern" umfassen. Darunter ist insbesondere eine Klassifikation zu verstehen, ob sich in gewissen Bereichen des Bildes Objekte befinden, oder nicht. Außerdem können sich die Begriffe "Klassifizierung" und "Bildklassifikation" auch auf eine "semantische Segmentierung" beziehen, insbesondere in der Form einer pixelweisen Klassifikation.

Vorteilhafterweise kann bei der Erfindung vorgesehen sein, dass durch die Auswahl der Bedingungen und Bereiche ein Einfluss der Bedingungen dynamisch während eines Generationsprozesses für den Datensatz erhalten, teilweise erhalten und/oder entfernt werden kann. Dies hat den Vorteil, dass eine flexible Steuerung der Bildgenerierung ermöglicht wird. Es ist möglich, verschiedene Bereiche zu berücksichtigen, ohne dabei die gesamte generierte Ausgabe des Modells in den betroffenen Bereichen zu beeinflussen. Dadurch kann sichergestellt werden, dass die Kontrolle auf spezifischen Bereichen angewendet wird, während andere Bereiche weiterhin das freie kreative Potenzial des Diffusionsmodells nutzen können.

Auch ist es optional denkbar, dass Bedingungen zumindest zwei der folgenden Elemente und/oder weitere ähnliche Elemente umfassen:
- Canny-Kanten, insbesondere zur Kanten- und Strukturerkennung,
- Semantische Label, insbesondere zur Klassifizierung und Annotation von Objekten,
- Farbpalette, insbesondere zur visuellen Differenzierung und Klassifizierung,
- Tiefenkarten, insbesondere zur Erfassung und Analyse räumlicher Informationen. Dadurch ist es möglich, dass verschiedene Merkmale des Bildes oder der Szene gezielt beeinflusst werden können.

Ebenfalls Gegenstand der Erfindung ist ein Maschinenlernmodell, insbesondere das voranstehend beschriebene maschinelle Lernsystem, welches mit wenigstens einem Datensatz trainiert worden ist, der durch ein erfindungsgemäßes Verfahren erhalten wurde. Damit bringt das erfindungsgemäße Maschinenlernmodell die gleichen Vorteile mit sich, wie sie ausführlich mit Bezug auf ein erfindungsgemäßes Verfahren beschrieben worden sind.

Es kann im Rahmen der Erfindung vorgesehen sein, dass das erfindungsgemäße Maschinenlernmodell für eine Verwendung bei einem zumindest teilweise autonomen Fahren und/oder bei einem Fahrerassistenzsystem trainiert worden ist. Dadurch kann das Fahrzeug auch in komplexen Fahrszenarien präziser gesteuert werden und so das Maschinenlernmodell zur Sicherheit des Fahrzeugs beigetragen. Außerdem ermöglicht das Training auf dem durch das erfindungsgemäße Verfahren generierten Datensatz eine hohe Genauigkeit bei der Erkennung und Interpretation von Umweltinformationen, was zu einer verbesserten Reaktionsfähigkeit auf Verkehrsbedingungen führt.

Es ist allgemeiner formuliert möglich, dass das maschinelle Lernsystem, insbesondere das erfindungsgemäße Maschinenlernmodell, bei einem Fahrzeug zum Einsatz kommt. Das Fahrzeug kann bspw. als ein Kraftfahrzeug und/oder Personenkraftfahrzeug und/oder autonomes Fahrzeug ausgebildet sein. Das Fahrzeug kann eine Fahrzeugeinrichtung, bspw. zur Bereitstellung einer autonomen Fahrfunktion und/oder ein Fahrerassistenzsystem aufweisen. Die Fahrzeugeinrichtung kann dazu ausgeführt sein, auf Basis einer Ausgabe des Lernsystems, das Fahrzeug zumindest teilweise automatisch zu steuern und/oder zu beschleunigen und/oder abzubremsen und/oder zu lenken.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer wie ein Steuergerät eines Fahrzeuges vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Speichermediums sowie eines Computerprogramms gemäß Ausführungsbeispielen der Erfindung.
- Fig. 2: beispielhafte Probleme bei einer Konditionierung der stabilen Diffusion auf Canny Edges nur mit ControlNet.
- Fig. 3: einen gemäß Ausführungsbeispielen vorgeschlagenen Ansatz mit kombinierten maskierten Bedingungen für das Training von ControlNet.

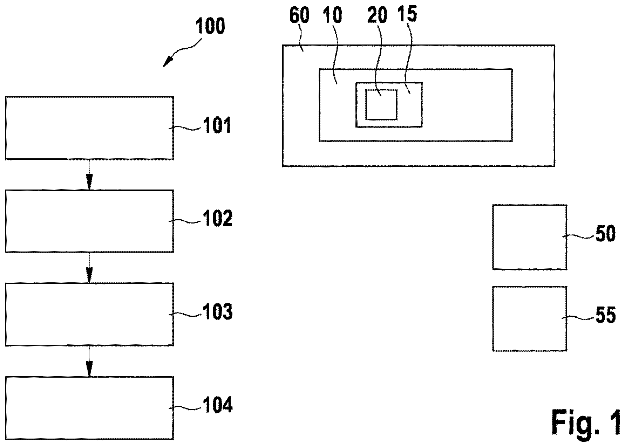

In Fig. 1 sind ein Verfahren 100, eine Vorrichtung 10, ein Speichermedium 15, ein Fahrzeug 60, ein Steuerungsmodell 50, ein Lernsystem 55 sowie ein Computerprogramm 20 gemäß Ausführungsbeispielen der Erfindung schematisch dargestellt.

Das Verfahren 100 kann dabei zur Generierung wenigstens eines Datensatzes zum Trainieren und/oder Testen eines maschinellen Lernsystems 55 dienen. Die Generierung des wenigstens einen Datensatzes kann dabei durch ein Steuerungsmodell 50 vorgesehen sein.

Gemäß einem ersten Verfahrensschritt 101 ist eine Auswahl von mindestens zwei verschiedenen Bedingungen für eine Anwendung bei der Generierung des Datensatzes möglich. Die Bedingungen können jeweils unterschiedliche Steuerungsmöglichkeiten für die Generierung des Datensatzes bereitstellen, wobei ein Einfluss der jeweiligen Bedingung auf die Generierung spezifiziert wird.

Gemäß einem zweiten Verfahrensschritt 102 erfolgt eine Auswahl von Bereichen 307 innerhalb der Bedingungen, in denen die Anwendung der Bedingungen ausgenommen wird.

In einem dritten Verfahrensschritt 103 erfolgt ein Kombinieren der ausgewählten Bedingungen.

Sodann kann gemäß einem vierten Verfahrensschritt 104 ein Generieren des Datensatzes mittels des Steuerungsmodells 50 bei Anwendung der kombinierten Bedingungen und unter Beachtung der ausgewählten Bereiche 307 vorgesehen sein,

Das Verfahren 100 kann ferner ein Bereitstellen von Originalbildern 301 umfassen, welche zum Training des Steuerungsmodells 50 und/oder eines durch das Steuerungsmodell 50 kontrollierten Bilddiffusionsmodell vorgesehen sind. Anschließend kann ein Durchführen der Auswahl 102 der Bereiche 307 in der Form von Pixeln und/oder Punkten und/oder zweidimensionalen Bereichen im Originalbild 301 erfolgen, in denen die, insbesondere kombinierten, Bedingungen nicht vorgesehen sein sollen. Mit anderen Worten werden solche Bereiche maskiert, die frei von einem Einfluss der Bedingungen sein sollen. Darin findet bspw. keine Kontrolle durch das Steuerungsmodell 50 hinsichtlich der Bedingungen statt.

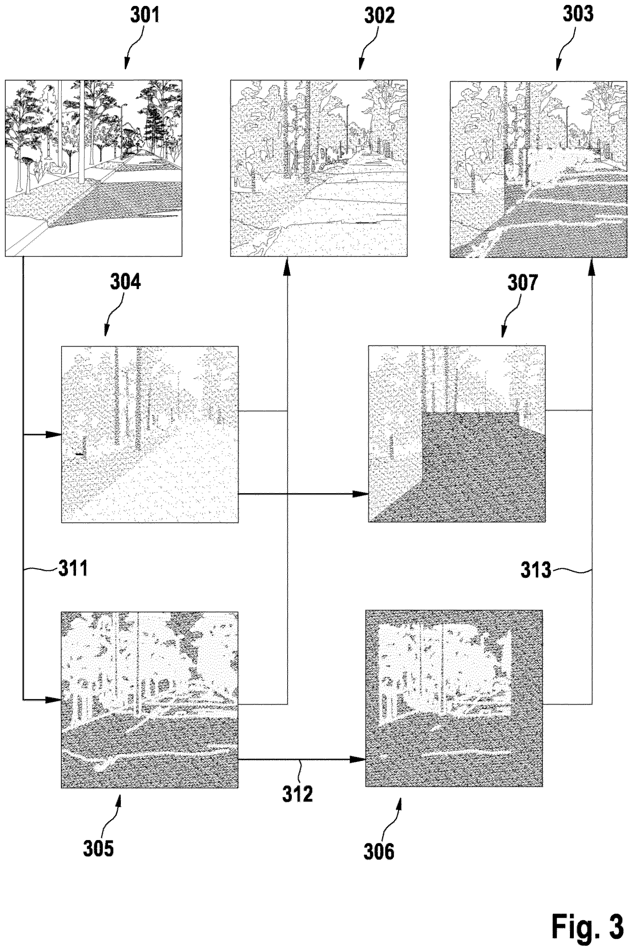

Die in Fig. 3 beispielhaft dargestellten Originalbilder 301 können eine Verkehrsszene repräsentieren, um den Datensatz für das Trainieren und/oder Testen des maschinellen Lernsystems 55 z. B. zur Steuerung eines Fahrzeuges 60 bei einem zumindest teilweise autonomen Fahren und/oder bei einem Fahrerassistenzsystem zu verwenden.

Das Steuerungsmodell 50 kann bspw. als ControlNet ausgeführt sein. ControlNet (s. [1], wobei die Referenzen am Ende der Beschreibung angegeben sind) ist eine Erweiterung des Stable-Diffusion-Modells und ermöglicht verfeinerte Anpassungen unter Verwendung einer Vielzahl von Bedingungen. Die Bedingungen können semantische Segmentierungs-Label-Maps, Canny-Kanten, Posenschätzungen und/oder zusätzliche Parameter umfassen. Während der Inferenzphase erleichtern diese Bedingungen die Regulierung des Bilderzeugungsprozesses. Dies kann zu Daten führen, die sich an bestimmte Szenenlayouts halten und gleichzeitig die robuste Textkonditionierung des vortrainierten Stable-Diffusion-Modells beibehalten.

Trotz des großen Potenzials dieser Technologie gibt es bestimmte Einschränkungen. Wenn Canny-Kanten, die aus einem separaten Bild für die Konditionierung extrahiert werden, verwendet werden, kann es passieren, dass bestimmte Objekte nicht ausreichend Informationen bieten, um die Kanten korrekt als "Fußgänger" zu identifizieren. Es handelt sich dabei bspw. um Objekte, die sich weit entfernt in einer Szene befinden - wie beispielsweise ein Fußgänger am anderen Ende einer Straße. Infolgedessen könnte der Diffusionsprozess diesen Teil der Eingabe als Störsignal wahrnehmen und ein nicht zutreffendes Objekt generieren. Zudem wurden Probleme bei der Konditionierung der stabilen Diffusion mittels Semantic Label Maps (SLM) festgestellt. Wenn beispielsweise aus einer Bildvorlage eine SLM oder Canny-Kanten extrahiert werden, kann dies bei den generierten Bildern oft zu einer unerwarteten Ausrichtung und Skalierung des markierten Objekts, wie einem Auto, führen.

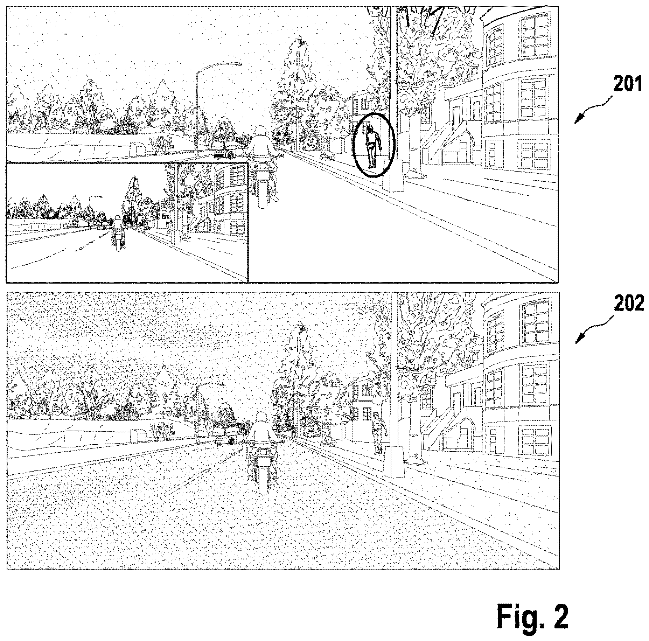

Fig. 2 zeigt beispielhafte Probleme bei der Konditionierung der stabilen Diffusion auf Canny Edges nur mit ControlNet. Es ist das Originalbild 201 gezeigt, aus dem die Kanten extrahiert werden. Darunter ist das generierte Bild 202 dargestellt. Wenn die Kanten verrauscht sind und vom Modell nicht erkannt werden, können Objekte verschwinden, wie im Beispiel der markierte Fußgänger.

Durch Hinzufügen von Klasseninformationen für den Fußgänger kann dieses Problem allerdings reduziert werden. So wird gemäß Ausführungsbeispielen der Erfindung vorgeschlagen, die Implementierung mehrerer gleichzeitiger Bedingungen vorzunehmen, denen während der Trainingsphase jeweils unterschiedliche Gewichte (Masken) zugewiesen werden. Dadurch können die dem Diffusionsmodell zugeführten Informationen angereichert werden. Diese erweiterten Informationen können während der Inferenz genutzt werden, um das vorgenannte Problem zumindest teilweise zu beheben.

Durch die gleichzeitige Verwendung von Bedingungen wie bspw. Canny-Kanten und semantischen Markenkarten (engl. Semantic Label Maps) kann die semantische Markenkarte selbst in Situationen, in denen die Kanten den entfernten Fußgänger nicht identifizieren können, die notwendigen Informationen liefern und so eine genaue Darstellung des Fußgängers bei der Bilderzeugung gewährleisten. Dieser Ansatz bietet daher zahlreiche Vorteile gegenüber dem bestehenden Stand der Technik.

In Ausführungsvarianten der Erfindung können zusätzlich auch - als solche bekannte-Methoden Verwendung finden, wie sie z. B. in [1], [2] oder [3] bekannt sind. Hierbei wurden konkret Text-Bild-Diffusionsmodelle (engl. Text-to-Image Diffusion Models) wie Stable Diffusion mit externen Steuersignalen wie Canny Edge, Semantic Label Maps, Skizzen (engl. Sketches) usw. kombiniert. Dies ermöglicht eine granulare Kontrolle über den Bilderzeugungsprozess, die über reine Textaufforderungen (engl. Prompts) hinausgeht. Mit einer solchen Konditionierung hat man ein hohes Maß an Kontrolle über verschiedene Aspekte des Bildes. Mit Canny Edge lassen sich beispielsweise Eigenschaften wie Position, Ausrichtung und Pose von Objekten definieren. Das sind Bedingungen, die mit Textaufforderungen allein nicht definiert werden können. Dadurch kann ein hohes Maß an Kontrolle über Text-Bild-Modelle wie stabile Diffusion bereitgestellt werden.

Die Entscheidung, welche bedingte Steuerung verwendet werden soll, bringt sowohl Vor- und Nachteile mit sich und sollte auf der Ebene der Anwendungsfallentscheidung getroffen werden. Bei der Verwendung von Canny Edge kann beispielsweise Pose und Ausrichtung definiert werden, aber bei weit entfernten Objekten im Hintergrund oder bei vielen nahe beieinander liegenden Objekten liefert Canny Edge dem Diffusionsmodell möglicherweise nicht die richtigen Informationen darüber, welches Objekt auf dem Bild zu zeichnen ist. Dies kann vorzugsweise durch die Verwendung von semantischen Labelmaps (engl. semantic label maps, im Rahmen der Erfindung auch als semantische Markenkarten bezeichnet) als Bedingungen gelöst werden, die für jedes Pixel im Bild definieren, welche Objektklasse gezeichnet werden soll. Dies gibt dem Benutzer allerdings nicht die Kontrolle über die Objektposition und -ausrichtung, wie es bei Canny Edge der Fall wäre.

Ausführungsbeispiele der Erfindung stellen daher eine Lösung bereit, um die Vorteile mehrerer Konditionierungseingänge zu kombinieren und gleichzeitig deren Einschränkungen zu mildern.

| **Bedingung** | **Canny Edge** | **Semantic Label Map** |
|---|---|---|
| Vorteile | Steuerung: Feinkörnige Kontrolle über Objektmerkmale wie Pose und Orientierung. | Vielfältigkeit: Gewährleistet, dass für jedes Pixel im Bild das gewünschte Objekt/die gewünschte Klasse gefunden wird. Gibt dem Diffusionsmodell mehr "Freiheit" (Vielfalt), wie es das gewünschte Objekt zeichnen soll. |
| Nachteile | Kleine (oder weit im Hintergrund liegende) Objekte können übersehen werden. | Geringe Kontrolle über verschiedene Merkmale des gewünschten Objekts wie Pose, Ausrichtung, Form oder dergleichen. |

Eine Möglichkeit, mehrere Bedingungen zu kombinieren, besteht darin, mehrere Kontrollnetze (engl. ControlNets) zu verwenden, die mit demselben Stable Diffusion Backbone verbunden sind, auch "Multi-Kontrollnetz" genannt. Ein ControlNet funktioniert, indem es die Knotenausgaben des Stable-Diffusion-Modells auf verschiedenen Zwischenschichten addiert oder subtrahiert, um es in die Richtung der Steuerungseingabe zu lenken. Wenn sie trainiert werden, werden nur die ControlNet-Modelle aktualisiert, so dass sie effektiv lernen, wie man das Diffusionsmodell steuert und nicht, wie man direkt ein Bild erzeugt.

Da sie nur die Werte des Diffusionsmodells an jedem Punkt addieren und subtrahieren, kann man beliebig viele ControlNet-Modelle über das Diffusionsmodell stapeln, und jedes wird es bei jedem Schritt in seine eigene Richtung lenken, was zu einem kumulativen Effekt von "gehorcht allen Steuerungen" für das Endergebnis führt.

In der Praxis hat sich diese Strategie jedoch bei der Erzeugung qualitativ hochwertiger Bilder nicht bewährt, da mehrere verkettete Bedingungen sich gegenseitig stören können (da sie nicht gemeinsam trainiert wurden) und es nicht möglich ist, verschiedene Bedingungen auf unterschiedliche Bildbereiche anzuwenden. Als Beispiel kann eine Fahrszene herangezogen werden, in der die Autos durch Canny-Kanten und der Hintergrund durch eine semantische Label-Map definiert sind. Diese Konfiguration würde eine präzise Kontrolle über das Aussehen der Autos ermöglichen und gleichzeitig dem Modell kreative Freiheit bei der Gestaltung des Hintergrunds einräumen, so dass der Benutzer ein Gleichgewicht zwischen Kontrolle und Vielfalt in verschiedenen Bildregionen herstellen kann. Dieser kritische Aspekt wird nachfolgend näher untersucht. Als Ausgangspunkt sei verwiesen auf:
[1] Zhang, Lvmin, und Maneesh Agrawala. "Adding conditional control to text-to-image diffusion models." arXiv preprint arXiv:2302.05543 (2023).
[2] Mou, Chong, et al. "T2i-adapter: Learning adapters to dig out more controllable ability for text-to-image diffusion models." arXiv preprint arXiv:2302.08453 (2023).
[3] Huang, Lianghua, et al. "Composer: Creative and controllable image synthesis with composable conditions." arXiv preprint arXiv:2302.09778 (2023).

Ausführungsbeispiele der Erfindung stellen eine neue Variation eines Trainings eines einzelnen ControlNets vor, welches mehrere Bedingungen gleichzeitig einbezieht. Um das voranstehend beschriebene Problem zu umgehen, ist es wichtig, diese Bedingungen gemeinsam zu trainieren. Außerdem soll jede Bedingung während der Inferenz optional sein, so dass der Diffusionsprozess qualitativ hochwertige Bilder unter Verwendung einer Teilmenge von Bedingungen erzeugen kann und Bedingungen berücksichtigt, die nur in bestimmten räumlichen Regionen vorhanden sind. Diese Flexibilität ermöglicht eine präzise Detaillierung der Szene, wo dies erforderlich ist (z. B. Objekt-Inpainting), während gleichzeitig freie Regionen (engl. unconstrained regions) für eine größere Varianz erhalten bleiben.

Fig. 3 zeigt einen gemäß Ausführungsbeispielen vorgeschlagenen Ansatz mit kombinierten maskierten Bedingungen für das Training von ControlNet. Im resultierenden Bedingungstensor 203 (oben rechts) enthalten einige Bereiche nur Beschriftungen, andere Bereiche nur canny edges, und einige Bereiche enthalten beides oder keines von beidem.

Zunächst werden aus dem Originalbild 301 Bedingungen extrahiert (s. 311). Es resultieren hieraus semantische Label 304 und Canny Edges 305, welche als Bedingungen 302 für die generative Bildsynthese dienen können. Aus einer Maskierung 312 können die Ergebnisse 306, 307 resultieren, welche zu Bedingungen kombiniert werden können (s. 313 und 303).

Grundsätzlich kann es für jede Art von Bedingung (Canny, semantische Label, Farbpalette, Tiefenkarte usw.) zumindest oder genau drei mögliche Aktionen geben: vollständige Beibehaltung, teilweise Beibehaltung (nach Klassen oder Bereichen) oder Entfernung. Indem während des Trainings eine optimale Kombination dieser Optionen für verschiedene Bedingungskarten ermittelt wird, können in der Inferenzphase qualitativ hochwertige Bilder aus jeder Kombination von Bedingungen erzeugt werden.

Damit ist es möglich, mehrere Bedingungen zur Steuerung der Bilderzeugung von Diffusionsmodellen gemeinsam zu kombinieren. Diese können maskiert werden und somit auf das gesamte Bild oder nur auf Teilbereiche angewendet werden, was eine größere Flexibilität bei der Bilderzeugung ermöglicht. Obwohl in der Trainingszeit mehrere Bedingungen angewendet werden, ist man in der Inferenzzeit nicht gezwungen, mehrere Bedingungen zu verwenden und kann sich immer noch für eine einzige entscheiden.

Da mehrere Bedingungen gemeinsam trainiert werden, kann eine höhere Bildqualität sichergestellt werden, wenn mehrere Bedingungen in der Inferenzzeit verwenden. Das disjunkte Trainieren mehrerer Bedingungen (der derzeitige Stand der Technik) führt zu einem widersprüchlichen Bilderzeugungsprozess, bei dem die mehreren Bedingungen nicht einfach zusammengeführt werden können.

Ein Ziel gemäß Ausführungsvarianten der Erfindung ist daher die Erzeugung fotorealistischer Bilder mit vordefinierten Fahrszenen, wobei die Bedingungen für die synthetische Bilderzeugung durch Diffusionsmodelle aus vorhandenen realen oder simulierten Bildern extrahiert werden.

Als eine mögliche Anwendung des Verfahrens gemäß Ausführungsvarianten der Erfindung ist es denkbar, dass diese synthetischen Bilder für die Anreicherung (Erweiterung) des Trainings und der Validierung von autonomen Fahrsystemen verwendet werden. Der vorgeschlagene Ansatz ist grundsätzlich jedoch nicht auf diesen Anwendungsfall beschränkt und kann in jedem Szenario eingesetzt werden, in dem synthetische Bilder gewünscht sind.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zur Generierung wenigstens eines Datensatzes zum Trainieren und/oder Testen eines maschinellen Lernsystems (55), wobei die Generierung durch ein Steuerungsmodell (50) vorgesehen ist, umfassend:
- Auswählen (101) von mindestens zwei verschiedenen Bedingungen für eine Anwendung bei der Generierung des Datensatzes, welche jeweils unterschiedliche Steuerungsmöglichkeiten für die Generierung des Datensatzes bereitstellen, wobei ein Einfluss der jeweiligen Bedingung auf die Generierung spezifiziert wird,
- Auswählen (102) von Bereichen (312) innerhalb der Bedingungen, in denen die Anwendung der Bedingungen ausgenommen wird,
- Kombinieren (103) der ausgewählten Bedingungen,
- Generieren (104) des Datensatzes mittels des Steuerungsmodells (50) bei Anwendung der kombinierten Bedingungen und unter Beachtung der ausgewählten Bereiche (312).

2. Verfahren (100) nach Anspruch 1,
**dadurch gekennzeichnet,**
**dass** bei dem Generieren (104) des Datensatzes eine Kontrolle des Generationsprozesses durch das Steuerungsmodell (50) entsprechend der ausgewählten Bedingungen und beschränkt auf den nicht ausgenommenen Bereich vorgenommen wird, und
**dass** auch Bereiche ausgewählt sind, in denen die Anwendung der Bedingungen vollständig ausgenommen wird, und in welchen somit kein Einfluss der Bedingungen spezifiziert ist und/oder Bedingungen angewendet werden und daher die Generation hinsichtlich der Bedingungen unkontrolliert durch das Steuerungsmodell (50) stattfindet.

3. Verfahren (100) nach einem der vorhergehenden Ansprüche,
**dadurch gekennzeichnet,**
**dass** das Verfahren (100) ferner umfasst:
- Erfassen einer ersten Benutzereingabe, welche eine manuelle Auswahl der Bedingungen spezifiziert,
- Erfassen einer zweiten Benutzereingabe, welche eine manuelle Auswahl der Bereiche spezifiziert,
wobei die Auswahl (101) der Bedingungen auf Basis der ersten Benutzereingabe und die Auswahl (102) der Bereiche auf Basis der zweiten Benutzereingabe erfolgt, um eine Entscheidung des Benutzers zu ermöglichen, welche Bedingungen kombiniert werden sollen, und um eine Maskierung der Bedingungen durch den Benutzer zu ermöglichen, welche ihren Einfluss auf die Generation des Datensatzes, insbesondere auf eine Bildsynthese, regelt.

4. Verfahren (100) nach einem der vorhergehenden Ansprüche,
**dadurch gekennzeichnet,**
**dass** das maschinelle Lernsystem (55) als ein Modell zur Bildsynthese, vorzugsweise als ein Bilddiffusionsmodell, ausgeführt ist, und/oder dass das Steuerungsmodell (50) als ein Modell zur Kontrolle eines Bilddiffusionsmodells zur Bildsynthese ausgeführt ist,
und **dass** der Datensatz mehrere synthetische Bilder umfasst, welche Objekte in einer Umgebung darstellen, die zum Trainieren und/oder Testen des maschinellen Lernsystems (55) vorgesehen sind,
wobei eine Gestaltung und/oder Anordnung der Objekte durch die Anwendung der Bedingungen beeinflusst wird.

5. Verfahren (100) nach einem der vorhergehenden Ansprüche,
**dadurch gekennzeichnet,**
**dass** die Anwendung der kombinierten Bedingungen durch ein einziges Steuerungsmodell (50) bereitgestellt wird, sodass vorzugsweise die Generierung des Datensatzes nur mittels eines einzigen Steuerungsmodells (50), insbesondere eines End-to-End trainiertes ControlNet, erfolgt.

6. Verfahren (100) nach einem der vorhergehenden Ansprüche,
**dadurch gekennzeichnet,**
**dass** das Verfahren (100) ferner umfasst:
- Bereitstellen (101) von Originalbildern (301), welche zum Training des Steuerungsmodells (50) und/oder eines durch das Steuerungsmodell (50) kontrollierten Bilddiffusionsmodell vorgesehen sind,
- Durchführen der Auswahl (102) der Bereiche (312) in der Form von Pixeln und/oder Punkten und/oder zweidimensionalen Bereichen im Originalbild, in denen die, insbesondere kombinierten, Bedingungen nicht vorgesehen sein sollen, wobei die Bedingungen vorzugsweise als räumlich definierte, bevorzugt zumindest zweidimensionale, Bedingungen ausgeführt sind, insbesondere in der Form einer Maske oder Map.

7. Verfahren (100) nach Anspruch 6,
**dadurch gekennzeichnet,**
**dass** die Originalbilder (301) eine Verkehrsszene repräsentieren, um den Datensatz für das Trainieren und/oder Testen des maschinellen Lernsystems (55) zur Steuerung eines Fahrzeuges (60) bei einem zumindest teilweise autonomen Fahren und/oder bei einem Fahrerassistenzsystem zu verwenden.

8. Verfahren (100) nach einem der vorhergehenden Ansprüche,
**dadurch gekennzeichnet,**
**dass** das Training dafür vorgesehen ist, das maschinelle Lernsystem (55) auf Basis des generierten Datensatzes zur Klassifizierung von digitalen Bildern auf Grundlage von Bildpunkten und/oder -pixeln zu trainieren, insbesondere von digitalen Bildern, welche aus einer Aufzeichnung einer Umgebung eines Fahrzeuges (60) während der Fahrt resultieren und/oder durch eine Kamera resultieren, wobei bevorzugt auf Basis der Klassifizierung eine Steuerung des Fahrzeuges (60) vorgesehen ist.

9. Verfahren (100) nach einem der vorhergehenden Ansprüche,
**dadurch gekennzeichnet,**
**dass** durch die Auswahl (101, 102) der Bedingungen und Bereiche (312) ein Einfluss der Bedingungen dynamisch während eines Generationsprozesses für den Datensatz erhalten, teilweise erhalten und/oder entfernt werden kann.

10. Verfahren (100) nach einem der vorhergehenden Ansprüche,
**dadurch gekennzeichnet,**
**dass** Bedingungen zumindest zwei der folgenden Elemente umfassen:
- Canny-Kanten zur Kanten- und Strukturerkennung,
- Semantische Label zur Klassifizierung und Annotation von Objekten,
- Farbpalette zur visuellen Differenzierung und Klassifizierung,
- Tiefenkarten zur Erfassung und Analyse räumlicher Informationen.

11. Maschinenlernmodell (55), welches mit wenigstens einem Datensatz trainiert worden ist, der durch ein Verfahren (100) nach einem der vorhergehenden Ansprüche erhalten wurde.

12. Maschinenlernmodell (55) nach Anspruch 11,
**dadurch gekennzeichnet,**
**dass** das Maschinenlernmodell (55) für eine Verwendung bei einem zumindest teilweise autonomen Fahren und/oder bei einem Fahrerassistenzsystem trainiert worden ist.

13. Computerprogramm (20), umfassend Befehle, die bei der Ausführung des Computerprogramms (20) durch wenigstens einen Computer (10) diesen veranlassen, das Verfahren (100) nach einem der Ansprüche 1 bis 10 auszuführen.

14. Vorrichtung (10) zur Datenverarbeitung, die eingerichtet ist, das Verfahren (100) nach einem der Ansprüche 1 bis 10 auszuführen.

15. Computerlesbares Speichermedium (15), umfassend Befehle, die bei der Ausführung durch wenigstens einen Computer (10) diesen veranlassen, die Schritte des Verfahren (100) nach einem der Ansprüche 1 bis 10 auszuführen.
